# EUROPEAN PATENT SPECIFICATION

(11) **EP 3 714 687 B1**
(45) Date of publication and mention of the grant of the patent: **07.06.2023**
(21) Application number: 20162324.6
(22) Date of filing: 11.03.2020
(51) Int. Cl.: A01K 61/60, A01K 61/80

(54) **BOAT STRUCTURE FOR FEEDING OFFSHORE FISH FARMING CAGES**
BOOTSSTRUKTUR ZUM FÜTTERN VON OFFSHORE-FISCHFARMKÄFIGEN
STRUCTURE DE BATEAU POUR ALIMENTER DES CAGES D'ÉLEVAGE DE POISSONS EN MER

(30) Priority: 28.03.2019 IT 201900004663
(43) Date of publication of application: 30.09.2020
(73) Proprietor: Emmetrade18 Limited, PLA 1211 Paola (MT)
(72) Inventor: SORRENTINO, Emanuele, Paola, PLA 1211 (MT)
(74) Representative: Rastelli, Franco

(56) References cited:
- JP-A- H09 294 500
- NO-A1- 20 101 635
- NO-A1- 20 170 205
- US-A- 6 016 767

## Description

### BACKGROUND OF THE INVENTION

The present invention relates to a boat structure for feeding cages of offshore fish farms, both at sea and in a lake.

As is known, in marine fish farming carried out in offshore floating cage plants, the fish are tended by shooting the feed in pellet form using air cannons and feeding cage after cage.

Publication NO 20 101 635 A1 discloses a boat that conveys the feed to the fish cages by means of discharge pipes connected to metering devices with which the feed silos are equipped.

This fish feeding system entails some disadvantages and drawbacks.

One disadvantage lies in the fact that the feed is distributed in a dry condition, not hydrated, and therefore not in natural form.

Another disadvantage is due to the fact that on windy days, with the air cannons, part of the feed is dispersed out of the cage.

Another disadvantage lies in the fact that maneuvering the boat onto the various cages is sometimes not easy due to the sea conditions and in any case expensive in terms of time and fuel.

### SUMMARY OF THE INVENTION

The aim of the present invention is to provide a boat structure for feeding the cages of offshore fish farms that overcomes the disadvantages of the prior art cited above.

Within this aim, one object of the invention is to provide a new system to feed offshore cages through which the fish can be fed with more natural feed.

Another object of the invention is to provide a system which makes it possible to reduce feed waste.

A further object of the present invention is to provide a system which makes it possible to reduce the time spent on feeding operations and very significantly reduce the daily hours the boats are in motion.

A further object of the present invention is to provide a structure which, due to its particular constructional characteristics, is capable of ensuring the most extensive guarantees of reliability and safety in use.

This and other objects, which will become more apparent below, are achieved through a boat structure for feeding the cages of offshore fish farms, defined in claim 1 and comprising a hull, a collector and mooring buoy, and a series of cages designed to contain fish to be fed; said hull housing containers for the storage of feed, and a series of silos arranged in correspondence with respective wells formed in said hull and open at the bottom; said structure further comprising a feed suction system consisting of suction pipes connected to said containers and to said silos which enable the feed to be sucked from the containers and brought to the silos through the action of a turbine assembly; said structure further comprising a feed supply system consisting of supply pipes connected to each well and to a submersible pump; said supply pipes leading to said collector and mooring buoy and departing from it to reach respective cages to be supplied with said feed; said turbine assembly creating a vacuum inside said silos and said feed being sucked by pneumatic floating from said containers until it reaches said silos above the wells; said feed being collected by said suction pipe and conveyed to said silos from where it descends by gravity into each well; said feed in said well mixed with sea water being sucked by said submersible pump and, through said supply pipes, being introduced into each of said cages in a rehydrated form.

### BRIEF DESCRIPTION OF THE DRAWINGS

Further characteristics and advantages of the present invention will become more apparent from an examination of the following detailed but not exclusive description of a preferred embodiment of the invention, illustrated by way of non-limitative example in the appended drawings, in which:

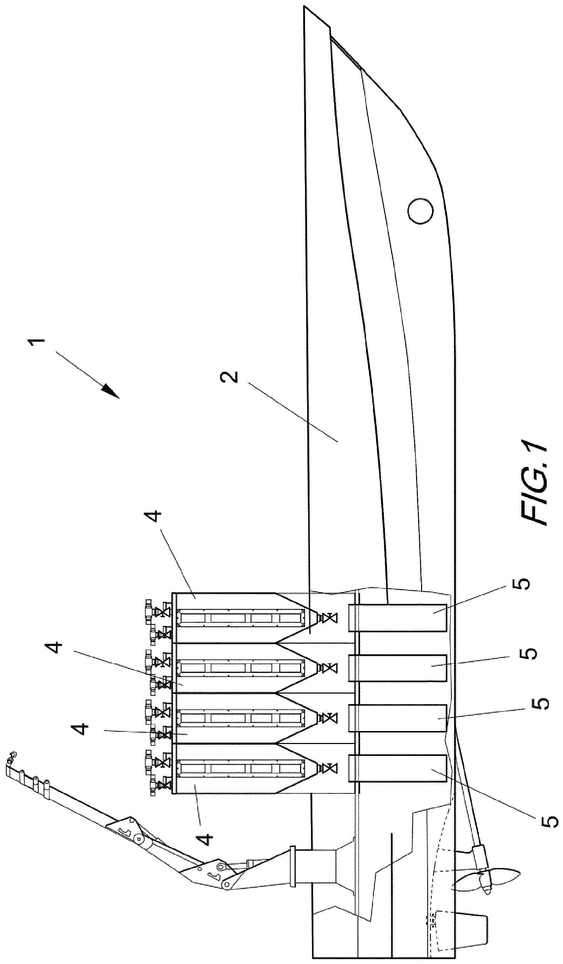

Figure 1 is a side view of the boat structure according to the present invention;

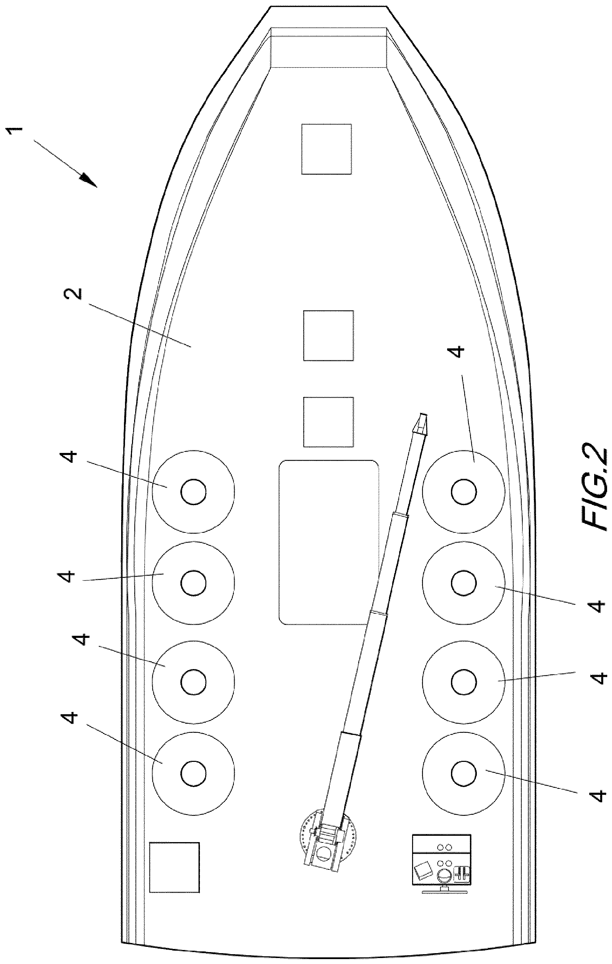

Figure 2 is a plan view of the boat structure;

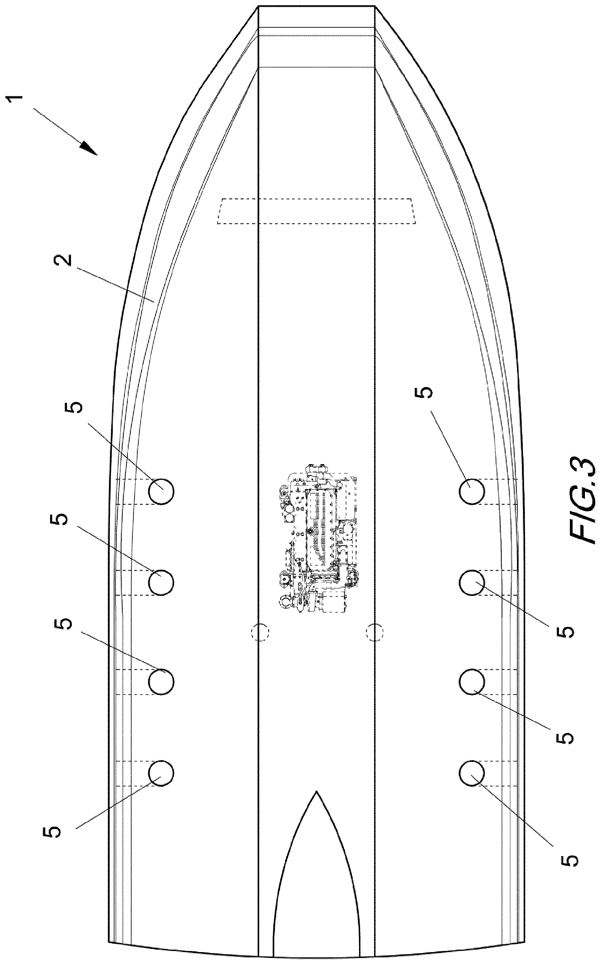

Figure 3 is a bottom view of the boat structure;

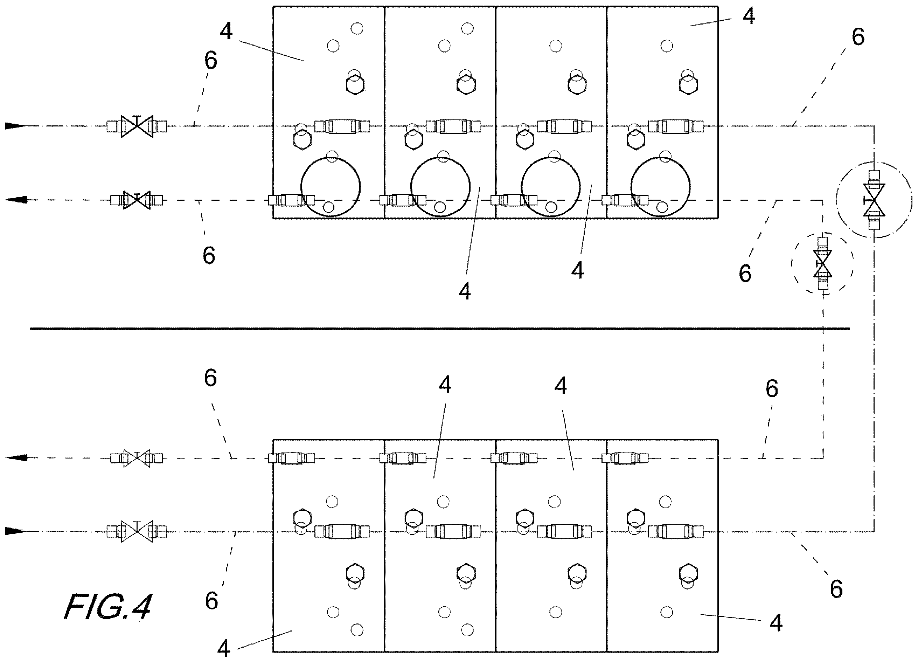

Figure 4 is a partial plan view of the vacuum system;

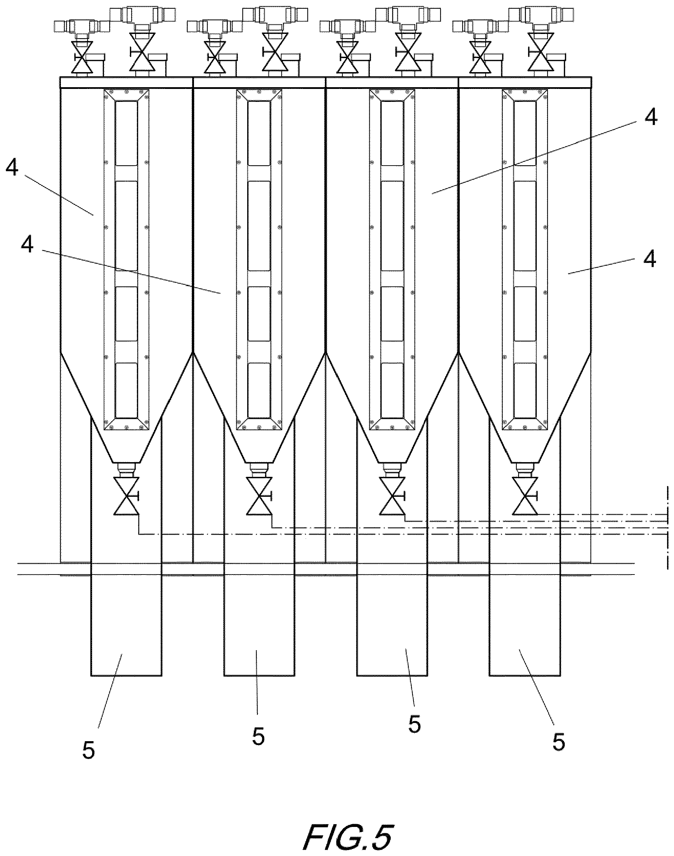

Figure 5 is a side view of part of the vacuum system;

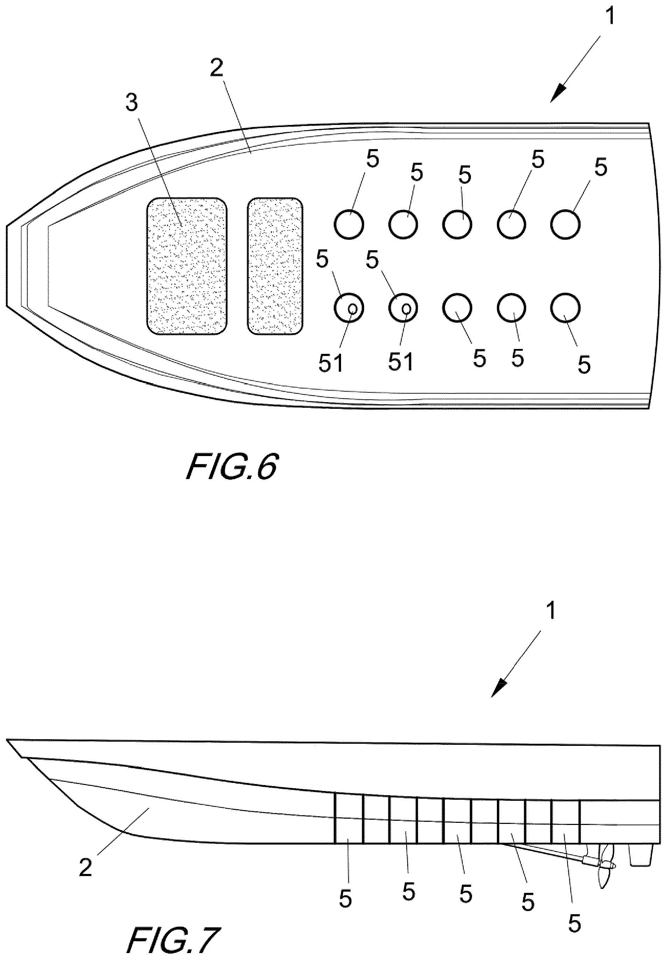

Figure 6 is a schematic plan view of the boat in which the water inlet holes in the well can be seen;
Figure 7 is a schematic side view of the boat in which the water inlet holes in the well can be seen;

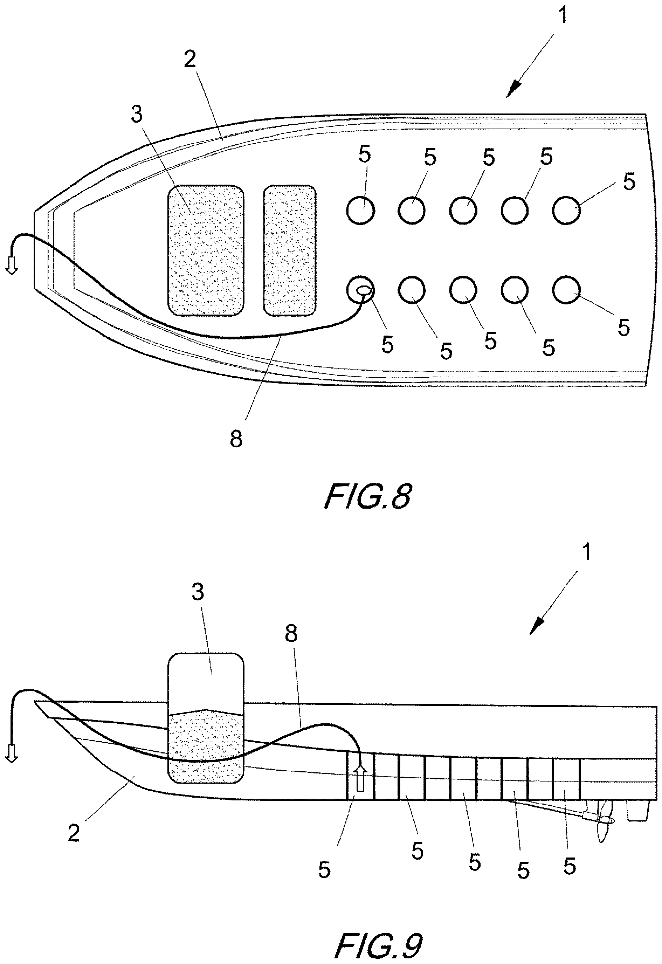

Figure 8 is a schematic plan view of the boat in which the silos for the feed and the piping which starts from the submersible pump and is coupled to the pipes of the collector buoy can be seen;
Figure 9 is a schematic side view of the boat in which the silos for feed and the piping which starts from the submersible pump and is coupled to the pipes of the collector buoy can be seen;

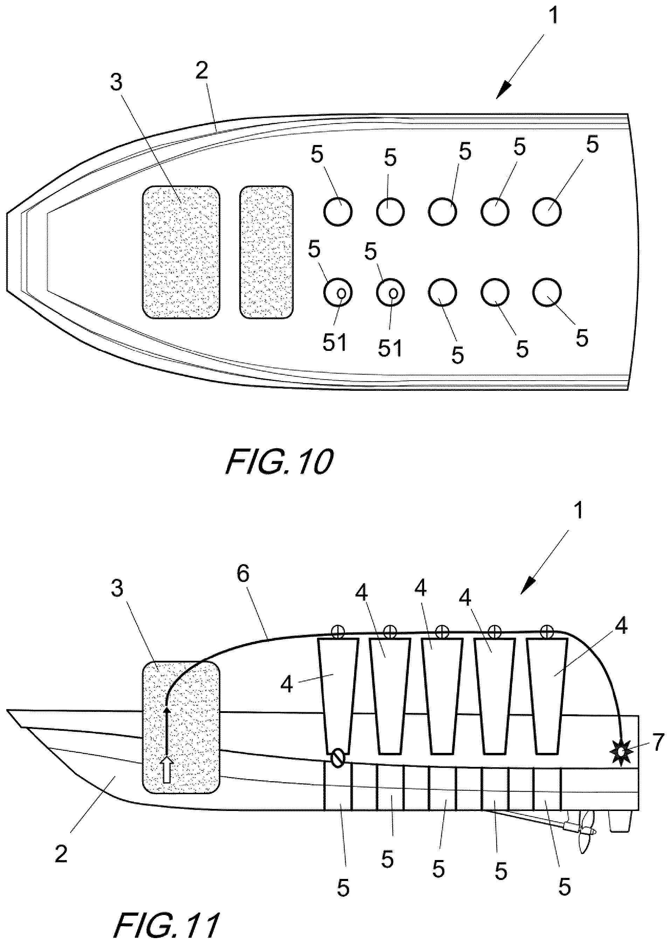

Figure 10 is a schematic plan view of the boat in which the operation of the vacuum system is schematically illustrated;
Figure 11 is a schematic side view of the boat in which the operation of the vacuum system is schematically illustrated;

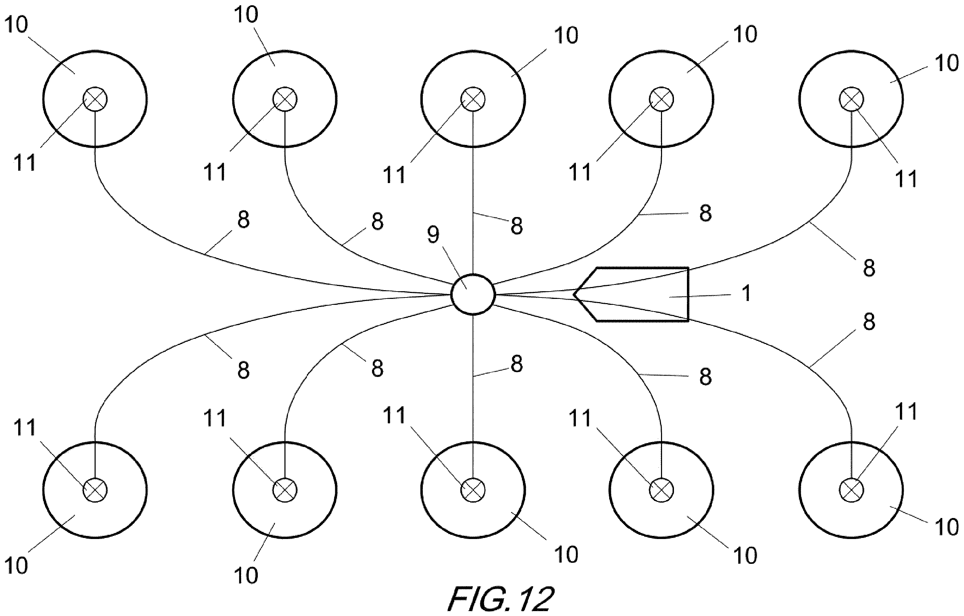

Figure 12 is a top view schematically showing the collector buoy, the boat, and the cages.

### DESCRIPTION OF THE PREFERRED EMBODIMENTS

With particular reference to the numerical references in the aforesaid figures, the boat structure according to the invention, indicated globally by the reference number 1, comprises a hull 2 which houses containers 3 for storing feed, and a series of silos 4 arranged in correspondence with respective wells 5, formed in the hull and open at the bottom of the same.

The structure also includes a feed suction system consisting of suction pipes 6 connected to the containers 3 and the silos 4 which enable the feed to be sucked from the containers 3 and brought to the silos 4 through the action of a turbine assembly 7.

The structure also comprises a feed supply system consisting of supply pipes 8 connected to each well 5 and to a submersible pump, not shown in the figures.

The supply pipes 8 lead to a collector and mooring buoy 9 and depart from it to reach respective cages 10 which are to be supplied with feed.

According to the present invention, the pump assembly 7 creates a vacuum inside the silos 4 and the feed is sucked by pneumatic floating from the storage containers 3 until it reaches the silos 4 above the wells 5.

The feed collected by the suction pipe 6 and conveyed into the silos 4 therefore descends by gravity into each well 5 through a valve which can be adjusted to vary the rate, using a so-called hourglass system.

Once introduced into the well 5, the feed, which is in the form of pellets, is sucked by open throat submersible pumps, so as not to ruin it, and introduced into each cage 10 through the supply pipes 8; in this way the originally dry pellet feed rehydrates on the way.

The on-board feed storage system, i.e. the feed containers 3, advantageously consists of lightweight, modular, fully removable and washable tanks, with roll-bar that forms an exoskeleton, with PVC tarpaulins, tested and suitable for the purpose.

The suction pipes 6, which convey the feed from the containers by pneumatic suction through vacuum into the graduated silos 4 for supplying the various cages 10, advantageously consist of flexible pipes.

The turbine assembly 7 advantageously consists of a double turbine.

The silos 4 are designed not to implode in the vacuum created by the turbine assembly and are graduated to count the exact kg to be introduced into each cage 10, according to the biomass, the type of fish and size.

Each silo 4 is equipped with an adjustable valve (hourglass system) and each valve is equipped with an air jet to allow the feed, which descends by gravity from the silo into the respective well 5 of sea water, not to interrupt the flow on account of the so-called cave effect.

Each silo 4 is numbered and graduated to provide the exact quantity and type of feed needed for each cage 10 depending on the type of fish and the size reached.

Each well 5 has a suitable hole 51 which takes into account the head of the submersible pump, the well in fact remains neutral on the waterline when the pumps are off, but once the pumps are turned on the well might be discharged due to the excessive head of the pump with respect to the hole; the hole 51 in the well is designed with an adequate step to prevent feed from dispersing from the hole 51 in the open sea.

A suitable generator set supports all the systems.

The collector buoy 9 has a coupling drum for the supply pipes 8 and for mooring the boat 1.

The boat therefore lies head to sea, as it is called in nautical terms, and always takes wind and sea on the bow, the best condition for staying in position when there is a swell.

Thanks to the structure according to the present invention the boat is not damaged because it does not have to moor onto each cage of the system, as is the case with systems of the known type; moreover, the fish are not disturbed while they eat.

The supply pipes 8 pass under the sea from the collector buoy 9, being full of sea water, and re-emerge directly at each cage 10, coupled in the center of the cage to a support structure 11; thus the pipes do not hinder navigation within the cage's water surface.

It has been observed in practice that the present invention fully achieves the intended aim and objects.

In fact, a boat structure has been provided which, through its high level of technology, including on-board storage of the necessary feed, the vacuum suction system to load the silos, the air system to facilitate descent of the feed uniformly via an hourglass, the precise metering of the feed supplied to each cage, the supply to all the cages at the same time, and above all the supply of feed in a rehydrated form, creates a new and inventive feeding system through which feed is delivered to the various cages via pipes with sea water.

No known feeding system enables feed to be supplied using sea water.

This is a very obvious advantage in comparison with known systems in which fish are managed by shooting the feed in dry pellet form from hoppers with air cannons and by feeding cage after cage, one cage at a time, so that the fish, which go into a feeding frenzy, eat it on the surface of the water, and therefore in a dry condition.

The system according to the present invention makes it possible to transfer the feed, originally in conventional dry pellet form, from the boat to the cages with sea water, hydrating it, by means of trunking.

All this, besides being much more efficient, respectful of the environment and the wellbeing of the fish, does not create waste or dispersion into the sea and therefore reduces the feed consumption by offering better conversion of the feed used in relation to the growth generated in the fish.

Furthermore, the present system greatly reduces the time spent on these feed supply activities, since it is possible, for example, to supply the feed simultaneously to 10 cages at a time.

It is easy to understand that at sea, with air cannons, on very windy days, there is a risk is that some of the feed will be dispersed out of the cage and that, feeding cage after cage, there will be particular difficulties with operations.

On the contrary, the structure according to the present invention enables the boat to moor in the center of the system, to the specifically designed collector buoy 9, and from there to reach all the cages in the system via the pipes.

The system illustrated in the present embodiment relates to modules having up to 10 cages but it is possible to provide modules with different numbers of cages.

All this results in less waste of feed, less waste of time and shorter time for which the boats are in motion; in fact the feed is produced using fish meal and, in addition to cost, any superfluous waste is harmful to the environment because more fish are used to produce it, in addition to the energy used to prepare it.

Conventional boats take a whole day to feed 10 cages, thus using a lot of fuel; on the contrary, through the present invention, times are reduced without detriment to feeding, which in fact takes place in a more natural and balanced way and with more calm.

The possibility of feeding all the cages simultaneously means that the fish in the various cages all eat at a set time, whereas with the conventional system the fish in different cages eat at very staggered times. It should be borne in mind that fish eat well in the early morning and in the evening.

Furthermore, in conventional systems that use hoppers and air cannons, the boat near the cage necessarily disturbs the fish while feeding them; moreover the fish in a nearby cage sense the eating in the adjacent cage and go into a frenzy and get enormously stressed until the feed boat arrives.

Through the structure according to the present invention, all the fish in the farm eat at appropriate times and without undergoing any stress, having no nearby boat in motion, and furthermore they do not have to wait to eat while feed is supplied to adjacent cages.

Naturally the materials used, as well as the dimensions, can be any according to requirements.

## Claims

1. A boat structure for feeding cages (10) of offshore fish farms, comprising a hull (2) and a collector and mooring buoy (9); said hull (2) housing containers (3) for the storage of feed and a series of silos (4) arranged in correspondence with respective wells (5) of sea water formed in said hull and open at the bottom; said structure further comprising a feed suction system consisting of suction pipes (6) connected to said containers (3) and to said silos (4) through which the feed is sucked from the containers (3) and brought to the silos (4) by the action of a turbine assembly (7); said structure further comprising a feed supply system consisting of supply pipes (8) connected to each well (5) and to a submersible pump; said supply pipes (8) leading to said collector and mooring buoy (9) and departing from it to reach respective cages (10) to be supplied with said feed; said turbine assembly (7) creating a vacuum inside said silos (4) and said feed being sucked by pneumatic floating from said containers (3) until it reaches said silos (4) above the wells (5); said feed being collected by said suction pipe (6) and conveyed into said silos (4) from where it descends by gravity into each well (5); said feed in said well (5), mixed with sea water, being sucked by said submersible pump and, through said supply pipes (8), being introduced into each of said cages (10) in a rehydrated form.

2. The structure according to claim 1, **characterized in that** said containers (3) consist of lightweight, modular, fully removable and washable tanks, with roll-bar forming an exoskeleton, with PVC tarpaulins.

3. The structure according to claim 1, **characterized in that** said suction pipes (6) are flexible and said silos (4) are graduated.

4. The structure according to claim 1, **characterized in that** said turbine assembly (7) consists of a double turbine.

5. The structure according to claim 1, **characterized in that** each silo (4) is equipped with an adjustable valve, with an hourglass system, and each adjustable valve is equipped with an air jet to enable the feed, which descends by gravity from the silo into the respective well (5) of sea water, not to stop flowing on account of the so-called cave effect.

6. The structure according to claim 1, **characterized in that** each well (5) has a hole (51) appropriate to the head of said submersible pump, said well remaining neutral on the waterline when the pumps are off; said hole (51) in the well having an adequate step to prevent feed from dispersing into the sea through said hole (51).

7. The structure according to claim 1, **characterized in that** said collector buoy (9) has a coupling drum for said supply pipes (8) and for mooring said hull (2).

8. The structure according to claim 1, **characterized in that** said supply pipes (8) pass under water from the collector buoy (9) and re-emerge directly at each cage (10), coupled to a supporting structure (11) in the center of the cage.

## Patentansprüche

1. Bootsstruktur zum Einbringen von Nahrung in Käfige (10) von Offshore-Fischzuchtanlagen, umfassend einen Rumpf (2) und eine Sammel- und Ankerboje (9) umfasst; wobei der Rumpf (2) Behälter (3) zur Lagerung von Futter und eine Reihe von Silos (4) aufnimmt, die in Verbindung mit jeweiligen Wannen (5) von Meerwasser stehend angeordnet sind, die in dem Rumpf ausgebildet und an der Unterseite offen sind; wobei die Struktur ferner ein Futteransaugsystem umfasst, das aus Ansaugleitungen (6), die mit den Behältern (3) und den Silos (4) verbunden sind, besteht, durch die hindurch das Futter unter der Wirkung einer Turbinenanordnung (7) aus den Behältern (3) angesaugt und in die Silos (4) eingebracht wird; wobei die Struktur ferner ein Futterzuführsystem umfasst, das aus Zuführleitungen (8) besteht, die mit jeder Wanne (5) und mit einer Tauchpumpe verbunden sind; wobei die Zuführleitungen (8) zu der Sammel- und Ankerboje (9) führen und so von dieser wegführen, dass sie jeweilige Käfige (10) erreichen, denen die Nahrung zugeführt werden soll; wobei die Turbinenanordnung (7) einen Unterdruck im Inneren der Silos (4) erzeugt und das Futter durch pneumatisches Schweben aus den Behältern (3) angesaugt wird, bis es die Silos (4) über den Wannen (5) erreicht; wobei das Futter durch die Ansaugleitung (6) gesammelt und in die Silos (4) befördert wird, von wo aus es durch Schwerkraft in jede Wanne (5) absinkt; wobei das Futter in der Wanne (5), vermischt mit Meerwasser, durch die Tauchpumpe angesaugt wird und, durch die Zuführleitungen (8) hindurch, in rehydrierter Form in jeden der Käfige (10) eingebracht wird.

2. Struktur nach Anspruch 1, **dadurch gekennzeichnet, dass** die Behälter (3) aus leichten, modularen, vollständig abnehmbaren und waschbaren Tanks, mit Überrollbügeln, die ein Exoskelett bilden, mit PVC-Persennings bestehen.

3. Struktur nach Anspruch 1, **dadurch gekennzeichnet, dass** die Ansaugleitungen (6) biegsam sind und die Silos (4) graduiert sind.

4. Struktur nach Anspruch 1, **dadurch gekennzeichnet, dass** die Turbinenanordnung (7) aus einer Doppelturbine besteht.

5. Struktur nach Anspruch 1, **dadurch gekennzeichnet, dass** jedes Silo (4) mit einem Stellventil, mit einem Sanduhrsystem, ausgerüstet ist, und jedes Stellventil mit einer Luftdüse ausgerüstet ist, die ermöglicht, dass das Futter, das durch Schwerkraft aus dem Silo in die jeweilige Wanne (5) von Meerwasser absinkt, nicht aufhört, aufgrund des so genannten Höhleneffekts zu strömen.

6. Struktur nach Anspruch 1, **dadurch gekennzeichnet, dass** jede Wanne (5) eine Öffnung (51) aufweist, die dem Kopf der Tauchpumpe entspricht, wobei die Wanne neutral auf der Wasserlinie verbleibt, wenn die Pumpe ausgeschaltet ist; wobei die Öffnung (51) in der Wanne eine ausreichende Stufe aufweist, um zu verhindern, dass sich Futter durch die Öffnung (51) hindurch ins Meer verteilt.

7. Struktur nach Anspruch 1, **dadurch gekennzeichnet, dass** die Sammelboje (9) eine Kopplungstrommel für die Zuführleitungen (8) und zur Verankerung des Rumpfs (2) aufweist.

8. Struktur nach Anspruch 1, **dadurch gekennzeichnet, dass** die Zuführleitungen (8) unter Wasser ausgehend von der Sammelboje (9) verlaufen und an jedem Käfig (10) direkt, gekoppelt an eine Haltestruktur (11) in der Mitte des Käfigs, wieder auftauchen.

## Revendications

1. Structure de bateau pour alimenter des cages (10) d'élevage off-shore de poissons, comprenant une coque (2) et une bouée de collecte et d'amarrage (9), ladite coque (2) logeant des récipients (3) pour le stockage de nourriture et une série de silos (4) agencés en correspondance avec des puits (5) respectifs d'eau de mer formés dans ladite coque et ouverts au fond; ladite structure comprenant en outre un système d'aspiration de nourriture consistant en des tuyaux d'aspiration (6) reliés auxdits récipients (3) et auxdits silos (4) à travers lesquels la nourriture est aspirée des récipients (3) et amenée vers les silos (4) par l'action d'un montage de turbine (7); ladite structure comprenant en outre un système d'alimentation en nourriture consistant en des tuyaux d'alimentation (8) connectés à chaque puits (5) et à une pompe submersible; lesdits tuyaux d'alimentation (8) menant à ladite bouée de collecte et d'amarrage (9) et partant de celle-ci pour atteindre des cages (10) respectives à alimenter avec ladite nourriture; ledit montage de turbine (7) créant un vide à l'intérieur desdits silos (4) et ladite nourriture étant aspirée par flottement pneumatique à partir desdits récipients (3) jusqu'à ce qu'elle atteigne lesdits silos (4) au-dessus des puits (5); ladite nourriture étant collectée par ledit tuyau d'aspiration (6) et transportée dans lesdits silos (4) d'où elle descend par gravité jusque dans chaque puits (5); ladite nourriture dans ledit puits (5), mélangée à de l'eau de mer, étant aspirée par ladite pompe submersible et, par lesdits tuyaux d'alimentation (8), étant introduite jusque dans chacune desdites cages (10) sous forme réhydratée.

2. Structure selon la revendication 1, **caractérisée en ce que** lesdits récipients (3) consistent en des réservoirs de poids léger, modulaires, entièrement amovibles et lavables, avec un arceau de sécurité formant un exosquelette, avec des bâches en PVC.

3. Structure selon la revendication 1, **caractérisée en ce que** lesdits tuyaux d'aspiration (6) sont flexibles et lesdits silos (4) sont gradués.

4. Structure selon la revendication 1, **caractérisée en ce que** ledit montage de turbine (7) consiste en une double turbine.

5. Structure selon la revendication 1, **caractérisée en ce que** chaque silo (4) est équipé d'une valve réglable, avec un système de sablier, et chaque valve réglable est dotée d'un jet d'air pour permettre à la nourriture, qui descend par gravité du silo jusque dans le puits respectif (5) d'eau de mer, de ne pas s'arrêter de s'écouler en raison de ce qu'on appelle un effet de cave.

6. Structure selon la revendication 1, **caractérisée en ce que** chaque puits (5) présente un trou (51) adapté à la tête de ladite pompe submersible, ledit puits restant neutre sur la ligne d'eau lorsque les pompes sont arrêtées : ledit trou (51) dans le puits ayant un gradin adéquat pour empêcher la nourriture de se disperser jusque dans la mer par ledit trou (51).

7. Structure selon la revendication 1, **caractérisée en ce que** ladite bouée de collecte (9) présente un tambour de couplage pour lesdits tuyaux d'alimentation (8) et pour amarrer ladite coque (2).

8. Structure selon la revendication 1, **caractérisée en ce que** lesdits tuyaux d'alimentation (8) passent sous l'eau depuis la bouée de collecte (9) et ré-émergent directement à chaque cage (10), couplés à une structure de support (11) au centre de la cage.
